# EUROPÄISCHE PATENTSCHRIFT

(11) **EP 3 571 428 B1**
(45) Veröffentlichungstag und Bekanntmachung des Hinweises auf die Patenterteilung: **20.01.2021**
(21) Anmeldenummer: 17825481.9
(22) Anmeldetag: 18.12.2017
(51) Int. Cl.: F16H 61/32, F16H 63/30

(54) **VORRICHTUNG ZUM VERSCHIEBEN EINES SCHALTELEMENTS UND GETRIEBE**
DEVICE FOR MOVING A SHIFTING ELEMENT, AND TRANSMISSION
DISPOSITIF PERMETTANT DE FAIRE COULISSER UN ÉLÉMENT DE PASSAGE DE VITESSE ET BOÎTE DE VITESSES

(30) Priorität: 23.01.2017 DE 102017201017
(43) Veröffentlichungstag der Anmeldung: 27.11.2019
(73) Patentinhaber: ZF Friedrichshafen AG, 88046 Friedrichshafen (DE)
(72) Erfinder: REISCH, Matthias, 88214 Ravensburg (DE); DREIBHOLZ, Ralf, 88074 Meckenbeuren (DE); WAFZIG, Jürgen, 88697 Bermatingen (DE)
(74) Vertreter: ZF Friedrichshafen AG
(86) Internationale Anmeldenummer: PCT/EP2017/083210
(87) Internationale Veröffentlichungsnummer: WO 2018/134009

(56) Entgegenhaltungen:
- DE-A1- 19 713 423
- DE-A1-102006 049 274
- DE-B4- 10 081 962
- US-A1- 2016 341 310

## Beschreibung

Die Erfindung betrifft eine Vorrichtung zum wahlweisen Verschieben eines Schaltelements in Richtung einer ersten Schaltstellung und/oder in Richtung einer zweiten Schaltstellung, die Vorrichtung aufweisend einen Aktuator und ein zwischen dem Aktuator und dem Schaltelement wirksames Federmodul. Außerdem betrifft die Erfindung ein Getriebe, insbesondere für ein Kraftfahrzeug.

Aus der DE 25 40 936 A1 ist ein fernschaltbares Getriebe bekannt, insbesondere Lastschaltgetriebe für Deckshilfsmaschinen, mit Ritzeln, die über einen Schaltzug zwischen den Schaltstellungen hin- und her bewegbar sind, dessen Schaltkrafterzeuger an ein elektrisches Steuersystem angeschlossen ist, welches fern vom Aufstellungsort des Getriebes die Auslösung des Schaltvorganges ermöglicht, bei dem innerhalb des Schaltzuges zwischen einem Festpunkt und dem zu bewegenden Schaltritzel ein oder mehrere in Schaltzugrichtung spannbare Federelemente eingeschaltet sind.

Aus der DE 10 2006 049 274 A1 ist eine Vorrichtung bekannt zum Betätigen eines drehbar auf einer Welle gelagerten Bauteiles, vorzugsweise eines als Losrad ausgeführten Zahnrades einer Getriebeeinrichtung, welches Bauteil über wenigstens eine einen elektrischen Aktor aufweisende Zuschalteinrichtung in einen zugeschalteten Zustand überführbar ist, zu dem das Bauteil mit der Welle drehfest verbunden ist, wobei das Bauteil aus dem Inneren der Welle heraus mit der zum Zu- oder Abschalten erforderlichen Betätigungskraft beaufschlagbar ist, bei der der wenigstens eine elektrische Aktor wenigstens teilweise im Inneren der Welle angeordnet ist.

Die DE 197 13 423 A1 offenbart eine Vorrichtung zur automatisierten Betätigung eines zwischen mehreren Gängen schaltbaren Getriebes mit einem zumindest bei einem Gangwechsel automatisiert betätigbaren Drehmomentübertragungssystem, mit zumindest einem von zumindest einer Antriebseinheit antreibbaren Betätigungselement und zumindest einem getriebeseitig angeordneten betätigbaren Schaltelement, wobei zwischen dem zumindest einen getriebeseitig angeordneten betätigbaren Schaltelement und der zumindest einen Antriebseinheit eine Antriebsverbindung vorhanden ist und im Wesentlichen im Kraftweg der Antriebsverbindung zwischen Antriebseinheit und dem zumindest einen Schaltelement eine zusätzliche vorgebbare Elastizität oder ein zusätzliches Element mit einer vorgebbaren Elastizität wirksam angeordnet ist.

Die DE 100 81 962 B4 betrifft eine elektromechanische Betätigungseinrichtung mit kontrolliertem Kraftaufwand. Offenbart ist eine elektromechanische Betätigungseinrichtung, umfassend eine Steuer- und Leistungselektronik für die Speisung einer Antriebseinheit, die ein Antriebsmittel und ein Bewegungsumwandlungsmittel umfasst und durch die über ein verformbares elastisches Element ein Betätigungselement verschiebbar ist, wobei das Betätigungselement dazu bestimmt ist, direkt auf ein Verbindungselement einzuwirken, das die Verbindung zwischen der Betätigungseinrichtung und einem Nehmer herstellt, wobei die Betätigungseinrichtung außerdem einen als erster Positionsgeber bezeichneten Positionsgeber umfasst, durch den an die Elektronik Informationen über die Position der Antriebseinheit lieferbar sind, und wobei ein zweiter Positionsgeber vorgesehen ist, durch den an die Elektronik Informationen über die Position des verformbaren elastischen Elements lieferbar sind, wobei durch die Informationen über die Position der Antriebseinheit einerseits und des verformbaren elastischen Elements andererseits durch Differenzbildung die auf das Stellelement ausgeübte Kraft erkennbar und sie demzufolge beherrschbar ist durch entsprechendes Einwirken auf die Position der Antriebseinheit. Die Positionsgeber umfassen jeweils einen Gleitkontakt, wobei die beiden Gleitkontakte geeignet sind, mit einer gemeinsamen Bahn oder mit jeweils einer von zwei parallel zueinander verlaufenden Bahnen zusammenzuwirken.

Die US 2016/341310 A1
offenbart eine eingebaute Synchronisiereinrichtung, umfassend Montagewellen und Zahnräder, wobei die Zahnräder auf der Montagewelle ummantelt sind; und ferner umfassend eine Keilnabe, eine Ablenkstange und einen bidirektionalen Synchronisationsring. Die Keilnabe ist mit der Befestigungswelle verbunden. An jedem Zahnrad ist ein konkaver Hohlraum angeordnet. Eine Seitenwand jedes konkaven Hohlraums ist mit einem inneren Gelenkzahnkranz versehen. In der Befestigungswelle ist eine Hohlwellenhülse angeordnet, und in der Wellenhülse ist ein Langloch vorgesehen. Ein Ende der Ablenkstange ist in die Keilnabe eingebettet, und das andere Ende der Ablenkstange durchdringt das Langloch der Wellenhülse und ist in einen inneren Hohlraum der Wellenhülse eingesetzt. Ein äußerer Zahnkranz der Keilnabe ist an den inneren Gelenkzahnkranz jedes der Zahnräder angepasst. Der bidirektionale Synchronisationsring ist zwischen der Keilnabe und den Seitenwänden der konkaven Hohlräume der Zahnräder vorgesehen.

Der Erfindung liegt die Aufgabe zugrunde, eine eingangs genannte Vorrichtung baulich und/oder funktional zu verbessern. Außerdem liegt der Erfindung die Aufgabe zugrunde, ein eingangs genanntes Getriebe baulich und/oder funktional zu verbessern.

Die Aufgabe wird gelöst mit einer Vorrichtung mit den Merkmalen des Anspruchs 1. Außerdem wird die Aufgabe gelöst mit einem Getriebe mit den Merkmalen des Anspruchs 10. Vorteilhafte Ausführungen und Weiterbildungen sind Gegenstand der Unteransprüche.

Das Schaltelement kann auf einer Welle angeordnet sein. Das Schaltelement kann mit der Welle drehfest verbunden sein. Die Welle kann eine Wellenachse aufweisen. Soweit nicht anders angegeben oder es sich aus dem Zusammenhang nicht anders ergibt, bezieht sich "axial" vorliegend auf die Wellenachse. Eine "axiale" Richtung entspricht dann einer Erstreckungsrichtung der Wellenachse.

Das Schaltelement kann axial verschiebbar sein. Das Schaltelement kann zum schaltbaren Verbinden mit wenigstens einem auf der Welle drehbar gelagerten Bauteil dienen. Das Schaltelement kann zum schaltbaren Verbinden mit einem auf der Welle drehbar gelagerten ersten Bauteil und/oder mit einem auf der Welle drehbar gelagerten zweiten Bauteil dienen. Das wenigstens eine auf der Welle drehbar gelagerte Bauteil kann ein Zahnrad sein. Das wenigstens eine auf der Welle drehbar gelagerte Bauteil kann ein Losrad sein. Das Schaltelement kann eine Schiebemuffe sein. Das Schaltelement und das wenigstens eine auf der Welle drehbar gelagerte Bauteil können korrespondierende Verzahnungen aufweisen. Das Schaltelement und das wenigstens eine auf der Welle drehbar gelagerte Bauteil können axial verschiebbare Verzahnungen aufweisen. Das Schaltelement und das wenigstens eine auf der Welle drehbar gelagerte Bauteil können axial verbindbare/lösbare Verzahnungen aufweisen.

Die Richtung zu der ersten Schaltstellung und die Richtung zu der zweiten Schaltstellung können einander axial entgegengesetzt sein. Der Aktuator kann einen Elektromotor aufweisen. Der Elektromotor kann einen Stator und einen Rotor aufweisen. Der Aktuator kann ein Aktuatorgehäuse aufweisen. Der Stator kann aktuatorgehäusefest angeordnet sein. Der Rotor kann relativ zu dem Stator drehbar sein. Der Elektromotor kann ein bürstenloser Gleichstrommotor (englisch Brushless DC Motor, abgekürzt BLDC- oder BL-Motor oder auch electronically commutated Motor, kurz EC-Motor) sein.

Der Aktuator und das Schaltelement können miteinander kinematisch verbunden sein. Das Federmodul kann in einer kinematischen Kette zwischen dem Aktuator und dem Schaltelement angeordnet sein. Die Vorrichtung kann ein Verbindungselement zum gegenseitigen Verbinden des schaltelementseitigen Krafteinleitungselements und des Schaltelements aufweisen.

Das aktuatorseitige Krafteinleitungselement kann mithilfe des Aktuators mechanisch beaufschlagbar sein. Das schaltelementseitige Krafteinleitungselement kann zum mechanischen Beaufschlagen des Schaltelements dienen. Das aktuatorseitige Krafteinleitungselement und das schaltelementseitige Krafteinleitungselement können zueinander axial verschiebbar sein. Das schaltelementseitige Krafteinleitungselement kann an dem aktuatorseitigen Krafteinleitungselement zentriert geführt sein. Das aktuatorseitige Krafteinleitungselement und das schaltelementseitige Krafteinleitungselement können das Federmodul jeweils klammerartig umgreifen. Das aktuatorseitige Krafteinleitungselement und das schaltelementseitige Krafteinleitungselement können ein Federgehäuse für die Federanordnung bilden.

Bei einer von dem Aktuator ausgehenden Beaufschlagung in Richtung der ersten Schaltstellung können sich das zweite Federende an dem ersten Stützabschnitt des aktuatorseitigen Krafteinleitungselements und das erste Federende an dem ersten Stützabschnitt des schaltelementseitigen Krafteinleitungselements abstützen. Bei einer von dem Aktuator ausgehenden Beaufschlagung in Richtung der ersten Schaltstellung können sich der zweite Stützabschnitt des aktuatorseitigen Krafteinleitungselements und der zweite Stützabschnitt des schaltelementseitigen Krafteinleitungselements von den Federenden abheben. Bei einer von dem Aktuator ausgehenden Beaufschlagung in Richtung der zweiten Schaltstellung können sich das erste Federende an dem zweiten Stützabschnitt des aktuatorseitigen Krafteinleitungselements und das zweite Federende an dem zweiten Stützabschnitt des schaltelementseitigen Krafteinleitungselements abstützen. Bei einer von dem Aktuator ausgehenden Beaufschlagung in Richtung der zweiten Schaltstellung können sich der erste Stützabschnitt des aktuatorseitigen Krafteinleitungselements und der erste Stützabschnitt des schaltelementseitigen Krafteinleitungselements von den Federenden abheben.

Eine von dem Aktuator ausgehende Beaufschlagung in Richtung der ersten Schaltstellung oder der zweiten Schaltstellung kann zunächst entgegen einer Federkraft der Federanordnung erfolgen, wobei die Federanordnung mechanische Energie speichert. Nachfolgend kann die in der Federanordnung gespeicherte mechanische Energie zur Beaufschlagung des schaltelementseitigen Krafteinleitungselements genutzt werden.

Die Federanordnung weist in einem ersten Quadrant eines Kraft-Weg-Diagramms eine Kennlinie mit einem ersten Kennlinienabschnitt mit kleinerer Steigung und einem zweiten Kennlinienabschnitt mit größerer Steigung auf. Der erste Kennlinienabschnitt kann mit zumindest annähernd konstanter Kraft verlaufen. Der zweite Kennlinienabschnitt kann mit zumindest annähernd linear steigender Kraft verlaufen.

Die Federanordnung kann in einem ersten Quadrant und in einem dritten Quadrant eines Kraft-Weg-Diagramms eine punktsymmetrische Kennlinie aufweisen. Die Federanordnung kann in dem ersten Quadrant und in dem dritten Quadrant des Kraft-Weg-Diagramms ausgehend von einem Ursprung eine Kennlinie mit jeweils einem ersten Kennlinienabschnitt mit kleinerer Steigung und jeweils einem zweiten Kennlinienabschnitt mit größerer Steigung aufweisen. Die ersten Kennlinienabschnitte können jeweils mit zumindest annähernd konstanter Kraft verlaufen. Die zweiten Kennlinienabschnitte können jeweils mit zumindest annähernd linear steigender Kraft verlaufen. Die Federanordnung kann vorgespannt sein.

Die Federanordnung kann mehrere Federn aufweisen. Die Federanordnung kann wenigstens eine erste Feder mit einer ersten Federkonstante und wenigstens eine zweite Feder mit einer zweiten Federkonstante aufweisen. Die Federanordnung kann Tellerfedern aufweisen. Die Federanordnung kann Schraubenfedern, gegebenenfalls mehrstufig, Kegelfedern, Evolutfedern oder Elastomerfedern aufweisen.

Der Aktuator, das aktuatorseitige Krafteinleitungselement, das Federmodul und/oder das schaltelementseitige Krafteinleitungselement können/kann innerhalb einer Welle angeordnet sein. Der Aktuator, das aktuatorseitige Krafteinleitungselement, das Federmodul und/oder das schaltelementseitige Krafteinleitungselement können/kann radial innerhalb einer Welle angeordnet sein.

Zwischen dem Aktuator und dem aktuatorseitigen Krafteinleitungselement kann eine Gewindespindel mit einer Spindelstange und einer Spindelmutter wirksam sein. Die Gewindespindel kann selbsthemmend sein. Die Spindelstange kann dem Aktuator zugeordnet sein. Die Spindelmutter kann dem aktuatorseitigen Krafteinleitungselement zugeordnet sein. Die Federanordnung kann radial außenseitig an dem aktuatorseitigen Krafteinleitungselement bzw. der Spindelmutter angeordnet sein. Die Federanordnung kann an dem aktuatorseitigen Krafteinleitungselement und/oder der Spindelmutter zentriert sein.

Das aktuatorseitige Krafteinleitungselement und das schaltelementseitige Krafteinleitungselement können zueinander drehfest und verschiebbar geführt sein. Das schaltelementseitige Krafteinleitungselement kann zu einem aktuatorfesten Bauteil drehfest und verschiebbar geführt sein. Das aktuatorseitige Krafteinleitungselement kann zu dem aktuatorfesten Bauteil drehfest und verschiebbar geführt sein. "Aktuatorfest" bedeutet vorliegend insbesondere aktuatorgehäusefest und/oder statorfest. Eine drehfeste und verschiebbare Führung kann auch als Verdrehsicherung bezeichnet werden.

Das Schaltelement kann ausgehend von einer Mittelstellung, in der eine Verbindung zwischen einer Welle und auf der Welle drehbar gelagerten Bauteilen geöffnet ist, wahlweise in eine erste Schaltstellung, in der die Verbindung zwischen der Welle und einem auf der Welle drehbar gelagerten ersten Bauteil geschlossen ist, oder in eine zweite Schaltstellung, in der die Verbindung zwischen der Welle und einem auf der Welle drehbar gelagerten zweiten Bauteil geschlossen ist, verschiebbar sein. Die erste Schaltstellung und die zweite Schaltstellung können Endstellungen sein. Das Federmodul kann sowohl bei einem Verschieben in Richtung der ersten Schaltstellung als auch bei einem Verschieben in Richtung der zweiten Schaltstellung wirksam sein. Das Schaltelement kann auch als Doppelschaltelement bezeichnet werden.

Das Getriebe kann ein Schaltgetriebe sein. Das Getriebe kann ein Stufenschaltgetriebe sein. Das Getriebe kann ein Doppelkupplungsgetriebe sein. Das Getriebe kann automatisiert betätigbar sein. Das Getriebe kann wenigstens eine Welle aufweisen. Die wenigstens eine Welle kann zumindest abschnittsweise hohl sein. Das Getriebe kann wenigstens ein auf der wenigstens einen Welle drehbar gelagertes Bauteil aufweisen. Das Getriebe kann ein auf der wenigstens einen Welle drehbar gelagertes erstes Bauteil und ein auf der wenigstens einen Welle drehbar gelagertes zweites Bauteil aufweisen. Das wenigstens eine auf der wenigstens einen Welle drehbar gelagerte Bauteil kann ein Zahnrad sein. Das wenigstens eine auf der wenigstens einen Welle drehbar gelagerte Bauteil kann ein Losrad sein. Das Getriebe kann ein Getriebegehäuse aufweisen.

Die Vorrichtung kann an der wenigstens einen Welle angeordnet sein. Das Schaltelement kann auf der wenigstens einen Welle angeordnet sein. Das Schaltelement kann axial zwischen dem ersten auf der wenigstens einen Welle drehbar gelagerten Bauteil und dem zweiten auf der wenigstens einen Welle drehbar gelagerten Bauteil angeordnet sein. Das Aktuatorgehäuse kann mit dem Getriebegehäuse fest verbunden sein.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung wird ein Schaltkomfort erhöht. Eine Schaltzeit wird reduziert. Ein Ausführen eines Schaltvorgangs wird gewährleistet. Ein Verschleiß, ein Geräusch und/oder ein Ruck werden/wird reduziert. Ein Einstellen eines geeigneten Drehzahlfensters beim Schließen einer Schaltverbindung wird erleichtert. Ein Bauraumbedarf wird reduziert. Ein Aufwand, wie Bauaufwand, Herstellungsaufwand und/oder Kostenaufwand, wird reduziert.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Welle mit zwei Losrädern, einem verschiebbaren Schaltelement und einer Vorrichtung mit einem Aktuator und einem Federmodul zum Verschieben des Schaltelements in einer Mittelstellung,
- Fig. 2: eine Vorrichtung mit einem Aktuator und einem Federmodul zum Verschieben eines Schaltelements in Schnittansicht,
- Fig. 3: eine Vorrichtung mit einem Aktuator und einem Federmodul zum Verschieben eines Schaltelements in Schnittansicht,
- Fig. 4: eine Vorrichtung mit einem Aktuator und einem Federmodul zum Verschieben eines Schaltelements bei Beaufschlagung in Richtung einer ersten Schaltstellung,
- Fig. 5: eine Vorrichtung mit einem Aktuator und einem Federmodul zum Verschieben eines Schaltelements bei Beaufschlagung in Richtung einer zweiten Schaltstellung,
- Fig. 6: eine Vorrichtung mit einem aktuatorseitigen Krafteinleitungselement und einem schaltelementseitigen Krafteinleitungselement zum Verschieben eines Schaltelements in perspektivischer Ansicht,
- Fig. 7: eine Vorrichtung mit einem aktuatorseitigen Krafteinleitungselement und einem schaltelementseitigen Krafteinleitungselement zum Verschieben eines Schaltelements in perspektivischer Ansicht und
- Fig. 8: ein Kraft-Weg-Diagramm einer Federanordnung einer Vorrichtung zum Verschieben eines Schaltelements.

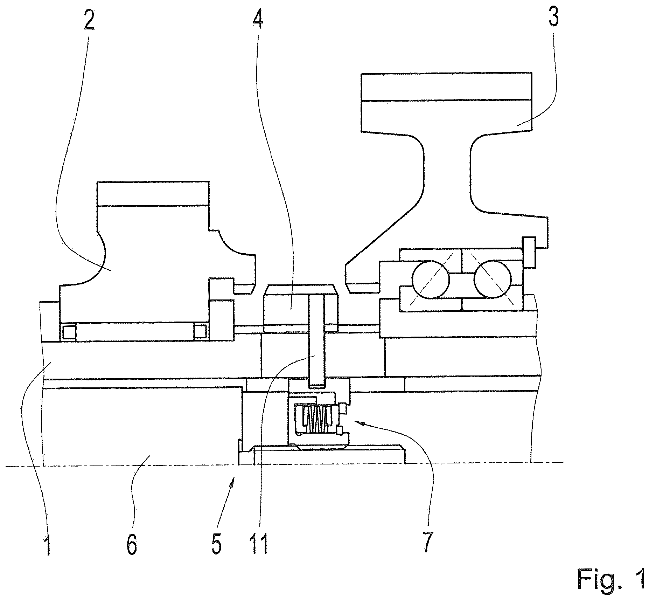

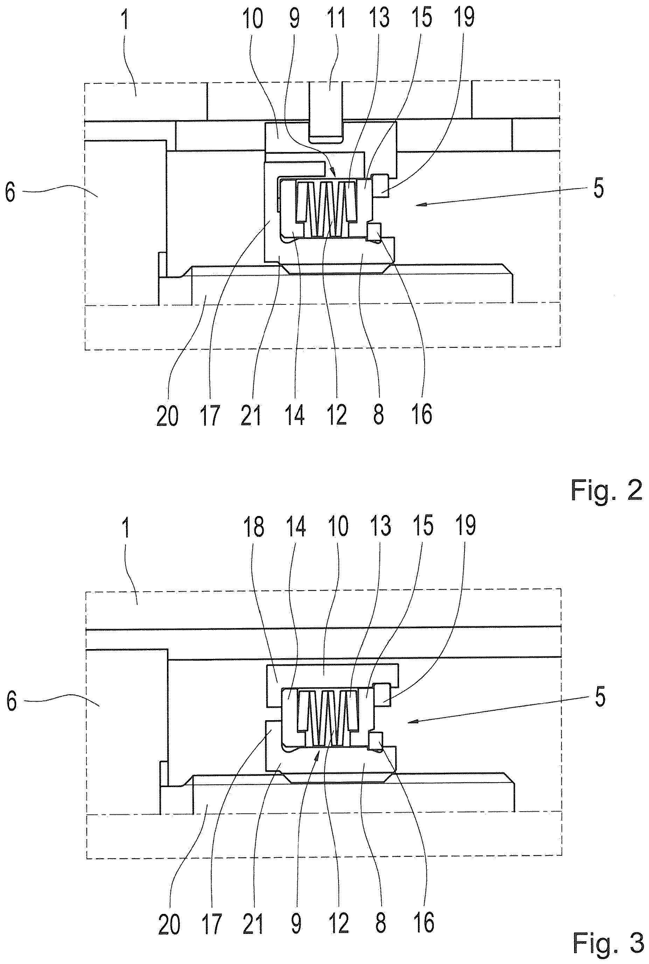

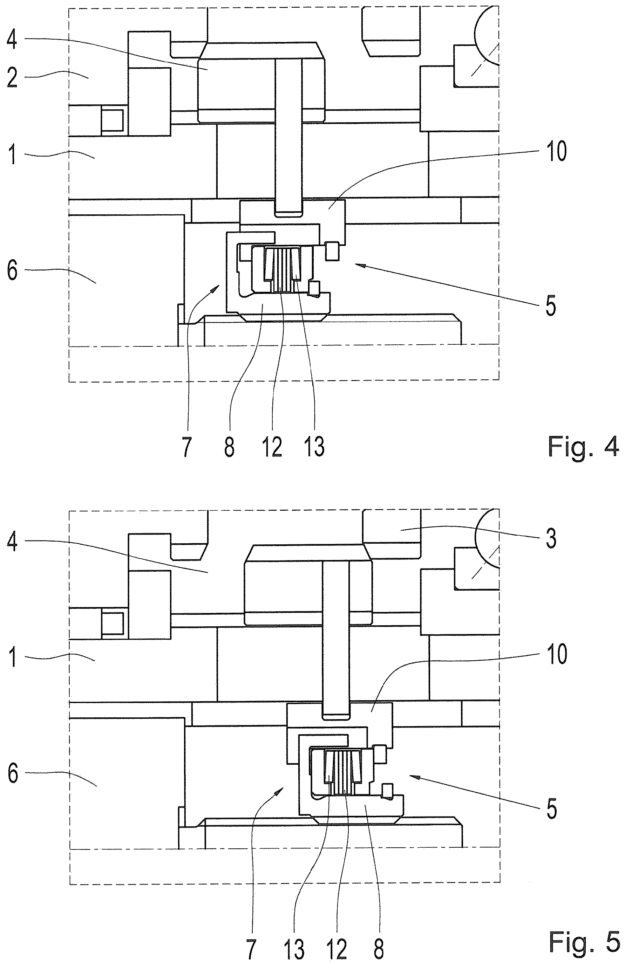

Fig. 1 zeigt eine Welle 1 mit einem ersten Losrad 2, einem zweiten Losrad 3, einem verschiebbaren Schaltelement 4 und einer Vorrichtung 5 mit einem Aktuator 6 und einem Federmodul 7 zum Verschieben des Schaltelements 4 in einer Mittelstellung. Fig. 2 und Fig. 3 zeigen die Vorrichtung 5 in unterschiedlichen Schnittansichten. Fig. 4 zeigt die Vorrichtung 5 bei Beaufschlagung in Richtung einer ersten Schaltstellung. Fig. 5 zeigt die Vorrichtung 5 bei Beaufschlagung in Richtung einer zweiten Schaltstellung.

Die Welle 1 ist eine Getriebewelle. Die Losräder 2, 3 sind auf der Welle 1 drehbar gelagert. Das Schaltelement 4 ist mit der Welle 1 drehfest verbunden und axial verschiebbar. Das Schaltelement 4 und die Losräder 2, 3 weisen korrespondierende axial verbindbare/lösbare Verzahnungen auf. Das Schaltelement 4 ist ausgehend von der in Fig. 1 gezeigten Mittelstellung, in der eine Verbindung zwischen der Welle 1 und den Losrädern 2, 3 geöffnet ist, wahlweise in die in Fig. 4 gezeigte Richtung, in der eine Verbindung zwischen der Welle 1 und dem ersten Losrad 2 geschlossen wird, oder in die in Fig. 5 gezeigte Schaltstellung, in der eine Verbindung zwischen der Welle 1 und dem zweiten Losrad 3 geschlossen wird, verschiebbar.

Das Federmodul 7 weist ein aktuatorseitiges Krafteinleitungselement 8, eine Federanordnung 9 und ein schaltelementseitiges Krafteinleitungselement 10 auf. Das schaltelementseitige Krafteinleitungselement 10 und das Schaltelement 4 sind mithilfe eines Verbindungselements 11 miteinander verbunden.

Die Federanordnung 9 weist erste weichere Tellerfedern, wie 12, zweite härtere Tellerfedern, wie 13, eine Anschlagscheibe, die ein erstes Federende 14 bildet, und eine Anschlagscheibe, die ein zweites Federende 15 bildet, auf. Mithilfe der Anschlagscheiben ist bezogen auf einen Umfang eine ortsunabhängige Beaufschlagung der Tellerfedern 12, 13 ermöglicht.

Das aktuatorseitige Krafteinleitungselement 8 weist einen in Richtung der ersten Schaltstellung wirksamen ersten Stützabschnitt 16 und einen in Richtung der zweiten Schaltstellung wirksamen zweiten Stützabschnitt 17 auf. Der erste Stützabschnitt 16 ist als Sicherungsring oder Rundring ausgeführt. Der zweiten Stützabschnitt 17 ist bundartig ausgeführt. Das aktuatorseitige Krafteinleitungselement 8 umgreift die Federanordnung 9 mit seinen Stützabschnitten 16, 17 klammerartig. Die Federanordnung 9 ist an dem aktuatorseitigen Krafteinleitungselement 8 radial zentriert.

Das schaltelementseitige Krafteinleitungselement 10 weist ebenfalls einen in Richtung der ersten Schaltstellung wirksamen ersten Stützabschnitt 18 und einen in Richtung der zweiten Schaltstellung wirksamen zweiten Stützabschnitt 19 auf. Der erste Stützabschnitt 18 ist bundartig ausgeführt. Der zweiten Stützabschnitt 19 ist als Sicherungsring oder Rundring ausgeführt. Das schaltelementseitige Krafteinleitungselement 10 umgreift die Federanordnung 9 mit seinen Stützabschnitten 18, 19 klammerartig.

Die Federanordnung 9 stützt sich vorgespannt mit ihrem ersten Federende 14 an dem ersten Stützabschnitt 18 des schaltelementseitigen Krafteinleitungselements 10 und dem zweiten Stützabschnitt 17 des aktuatorseitigen Krafteinleitungselements 8 und mit ihrem zweiten Federende 15 an dem ersten Stützabschnitt 16 des aktuatorseitigen Krafteinleitungselements 8 und dem zweiten Stützabschnitt 19 des schaltelementseitigen Krafteinleitungselements 10 ab. Das aktuatorseitige Krafteinleitungselement 8 und das schaltelementseitige Krafteinleitungselement 10 bilden ein Federgehäuse für die Federanordnung 9.

Das aktuatorseitige Krafteinleitungselement 8 und das schaltelementseitige Krafteinleitungselement 10 sind zueinander und zu der Welle 1 drehfest und axial verschiebbar. Das schaltelementseitige Krafteinleitungselement 10 ist an dem aktuatorseitigen Krafteinleitungselement 8 zentriert geführt.

Die Welle 1 ist zumindest abschnittsweise hohl. Der Aktuator 6 und das Federmodul 7 sind radial innerhalb der Welle 1 angeordnet. Das Verbindungselement 11 erstreckt sich nach radial außen über eine Wellenoberfläche hinaus.

Der Aktuator 6 weist ein Aktuatorgehäuse auf. Der Aktuator 6 ist mit seinem Aktuatorgehäuse wellenfest angeordnet. Der Aktuator 6 weist einen Elektromotor mit einem aktuatorgehäusefesten Stator und einem relativ zu dem Stator drehbaren Rotor auf. Der Elektromotor ist beispielsweise ein bürstenloser Gleichstrommotor.

Zwischen dem Aktuator 6 und dem aktuatorseitige Krafteinleitungselement 8 ist eine selbsthemmende Gewindespindel mit einer Spindelstange 20 und einer Spindelmutter 21 wirksam. Die Spindelstange 20 ist mithilfe des Elektromotors drehbar. Die Spindelmutter 21 ist vorliegend an dem schaltelementseitigen Krafteinleitungselement 10 ausgebildet.

Zum Schließen einer Verbindung zwischen dem ersten Losrad 2 und dem Schaltelement 4 wird ausgehend von der Mittelstellung das aktuatorseitige Krafteinleitungselement 8 mithilfe des Aktuators 6 in Richtung der ersten Schaltstellung beaufschlagt. Wenn die Verzahnungen des Schaltelements 4 und des ersten Losrads 2 wie in Fig. 4 gezeigt Zahn auf Zahn aufeinander treffen, werden das aktuatorseitige Krafteinleitungselement 8 und das schaltelementseitige Krafteinleitungselement 10 entgegen einer Federkraft der Tellerfedern 12, 13 gegeneinander verschoben und die Tellerfedern 12, 13 werden weiter gespannt. Sobald differenzdrehzahlbedingt Zähne und Lücken der Verzahnungen des Schaltelements 4 und des ersten Losrads 2 aufeinandertreffen, spuren die Verzahnungen unter Entlastung der Tellerfedern 12, 13 ein.

Zum Schließen einer Verbindung zwischen dem zweiten Losrad 3 und dem Schaltelement 4 wird ausgehend von der Mittelstellung das aktuatorseitige Krafteinleitungselement 8 mithilfe des Aktuators 6 in Richtung der zweiten Schaltstellung beaufschlagt. Wenn die Verzahnungen des Schaltelements 4 und des zweiten Losrads 3 wie in Fig. 5 gezeigt Zahn auf Zahn aufeinander treffen, werden das aktuatorseitige Krafteinleitungselement 8 und das schaltelementseitige Krafteinleitungselement 10 entgegen einer Federkraft der Tellerfedern 12, 13 gegeneinander verschoben und die Tellerfedern 12, 13 werden weiter gespannt. Sobald differenzdrehzahlbedingt Zähne und Lücken der Verzahnungen des Schaltelements 4 und des zweiten Losrads 3 aufeinandertreffen, spuren die Verzahnungen unter Entlastung der Tellerfedern 12, 13 ein.

Damit wird ein zwischen dem Schaltelement 4 und einem Losrad 2, 3 wirkendes Synchronmoment begrenzt und ein rasches ausreichend tiefes Eintauchen von Zähnen in Lücken der Verzahnungen zwischen dem Schaltelement 4 und einem Losrad 2, 3 wird unterstützt. Das Federmodul 7 wird sowohl beim Schalten in Richtung der ersten Schaltstellung als auch beim Schalten in Richtung der zweiten Schaltstellung genutzt.

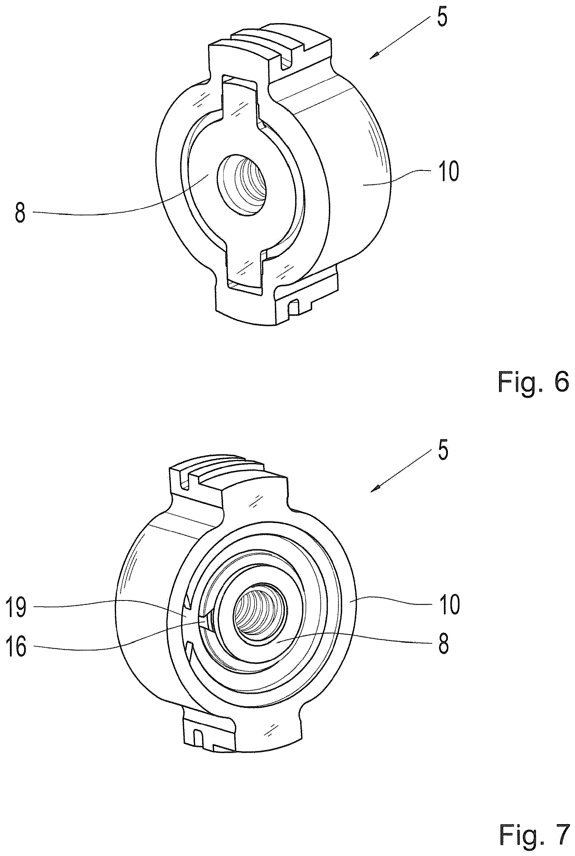

Fig. 6 zeigt die Vorrichtung 5 mit dem aktuatorseitigen Krafteinleitungselement 8 und dem schaltelementseitigen Krafteinleitungselement 10 zum Verschieben eines Schaltelements in perspektivischer Ansicht von vorne. Ersichtlich sind eine Verdrehsicherung zwischen dem aktuatorseitigen Krafteinleitungselement 8 und dem schaltelementseitigen Krafteinleitungselement 10 und eine Verdrehsicherung zur aktuatorgehäuseseitigen Abstützung des schaltelementseitigen Krafteinleitungselements 10. Fig. 7 zeigt die Vorrichtung 5 in perspektivischer Ansicht von hinten. Ersichtlich sind der erste Stützabschnitt 16 des aktuatorseitigen Krafteinleitungselements 8 und der zweite Stützabschnitt 19 des schaltelementseitigen Krafteinleitungselements 10. Im Übrigen wird ergänzend insbesondere auf Fig. 1 bis Fig. 5 und die zugehörige Beschreibung verwiesen.

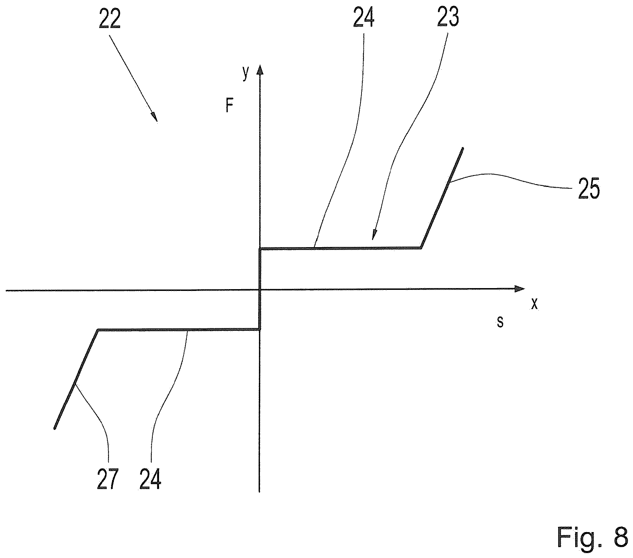

Fig. 8 zeigt ein Kraft-Weg-Diagramm 22 der Federanordnung 9. In dem Diagramm sind auf einer x-Achse ein Federweg und auf einer y-Achse eine Federkraft aufgetragen. Die Federanordnung 9 weist eine punktsymmetrische Kennlinie 23 auf. Ausgehend von einem Ursprung weist die Kennlinie 23 in einem ersten Quadrant des Kraft-Weg-Diagramms 22 einen ersten Kennlinienabschnitt 24 mit zumindest annähernd konstanter Kraft und anschließend einen zweiten Kennlinienabschnitt 25 mit zumindest annähernd linear steigender Kraft auf. Ausgehend von dem Ursprung weist die Kennlinie 23 in einem dritten Quadrant des Kraft-Weg-Diagramms 22 einen ersten Kennlinienabschnitt 26 mit zumindest annähernd konstanter Kraft und anschließend einen zweiten Kennlinienabschnitt 27 mit zumindest annähernd linear steigender Kraft auf. Bei einem Schließen der Verbindung zwischen dem ersten Losrad 2 und dem Schaltelement 4 ist die Kennlinie in dem dritten Quadrant des Kraft-Weg-Diagramms 22 wirksam. Bei einem Schließen der Verbindung zwischen dem zweiten Losrad 3 und dem Schaltelement 4 ist die Kennlinie in dem ersten Quadrant des Kraft-Weg-Diagramms 22 wirksam. Im Übrigen wird ergänzend insbesondere auf Fig. 1 bis Fig. 7 und die zugehörige Beschreibung verwiesen.

### Bezugszeichen

- 1: Welle
- 2: erstes Bauteil, erstes Losrad
- 3: zweites Bauteil, zweites Losrad
- 4: Schaltelement
- 5: Vorrichtung
- 6: Aktuator
- 7: Federmodul
- 8: aktuatorseitiges Krafteinleitungselement
- 9: Federanordnung
- 10: schaltelementseitiges Krafteinleitungselement
- 11: Verbindungselement
- 12: erste Tellerfeder
- 13: zweite Tellerfeder
- 14: erstes Federende
- 15: zweites Federende
- 16: erster Stützabschnitt
- 17: zweiter Stützabschnitt
- 18: erster Stützabschnitt
- 19: zweiter Stützabschnitt
- 20: Spindelstange
- 21: Spindelmutter
- 22: Kraft-Weg-Diagramm
- 23: Kennlinie
- 24: erster Kennlinienabschnitt
- 25: zweiter Kennlinienabschnitt
- 26: erster Kennlinienabschnitt
- 27: zweiter Kennlinienabschnitt

## Patentansprüche

1. Vorrichtung (5) zum wahlweisen Verschieben eines Schaltelements (4) in Richtung einer ersten Schaltstellung und/oder in Richtung einer zweiten Schaltstellung, die Vorrichtung (5) aufweisend einen Aktuator (6) und ein zwischen dem Aktuator (6) und dem Schaltelement (4) wirksames Federmodul (7), wobei
- das Federmodul (7) ein aktuatorseitiges Krafteinleitungselement (8), ein schaltelementseitiges Krafteinleitungselement (10) und eine zwischen den Krafteinleitungselementen (8, 10) wirksame Federanordnung (9) mit einem ersten Federende (14) und einem zweiten Federende (15) aufweist,
- das aktuatorseitige Krafteinleitungselement (8) und das schaltelementseitige Krafteinleitungselement (10) jeweils einen in Richtung der ersten Schaltstellung wirksamen ersten Stützabschnitt (16, 18) und einen in Richtung der zweiten Schaltstellung wirksamen zweiten Stützabschnitt (17, 19) zur Abstützung der Federenden (14, 15) aufweist und
- das erste Federende (14) dem ersten Stützabschnitt (18) des schaltelementseitigen Krafteinleitungselements (10) und dem zweiten Stützabschnitt (17) des aktuatorseitigen Krafteinleitungselements (8) und das zweite Federende (15) dem ersten Stützabschnitt (16) des aktuatorseitigen Krafteinleitungselements (8) und dem zweiten Stützabschnitt (19) des schaltelementseitigen Krafteinleitungselements (10) zugeordnet ist, **dadurch gekennzeichnet, dass** die Federanordnung (9) in einem ersten Quadrant eines Kraft-Weg-Diagramms (22) eine Kennlinie (23) mit einem ersten Kennlinienabschnitt (24) mit kleinerer Steigung und einem zweiten Kennlinienabschnitt (25) mit größerer Steigung aufweist.

2. Vorrichtung (5) nach Anspruch 1, **dadurch gekennzeichnet, dass** die Federanordnung (9) in einem ersten Quadrant und in einem dritten Quadrant eines Kraft-Weg-Diagramms (22) eine punktsymmetrische Kennlinie (23) aufweist.

3. Vorrichtung (5) nach wenigstens einem der vorhergehenden Ansprüche, **dadurch gekennzeichnet, dass** die Federanordnung (9) vorgespannt ist.

4. Vorrichtung (5) nach wenigstens einem der vorhergehenden Ansprüche, **dadurch gekennzeichnet, dass** die Federanordnung (9) Tellerfedern (12, 13) aufweist.

5. Vorrichtung (5) nach wenigstens einem der vorhergehenden Ansprüche, **dadurch gekennzeichnet, dass** der Aktuator (6), das aktuatorseitige Krafteinleitungselement (8), das Federmodul (7) und/oder das schaltelementseitige Krafteinleitungselement (10) innerhalb einer Welle (1) angeordnet sind/ist.

6. Vorrichtung (5) nach wenigstens einem der vorhergehenden Ansprüche, **dadurch gekennzeichnet, dass** zwischen dem Aktuator (6) und dem aktuatorseitigen Krafteinleitungselement (8) eine Gewindespindel mit einer Spindelstange (20) und einer Spindelmutter (21) wirksam ist.

7. Vorrichtung (5) nach wenigstens einem der Ansprüche 1 bis 6, **dadurch gekennzeichnet, dass**
- das aktuatorseitige Krafteinleitungselement (8) und das schaltelementseitige Krafteinleitungselement (10) zueinander drehfest und verschiebbar geführt sind und
- das schaltelementseitige Krafteinleitungselement (10) zu einem aktuatorfesten Bauteil drehfest und verschiebbar geführt ist.

8. Vorrichtung (5) nach wenigstens einem der Ansprüche 1 bis 6, **dadurch gekennzeichnet, dass** das aktuatorseitige Krafteinleitungselement (8) zu dem aktuatorfesten Bauteil drehfest und verschiebbar geführt ist.

9. Vorrichtung (5) nach wenigstens einem der vorhergehenden Ansprüche, **dadurch gekennzeichnet, dass** das Schaltelement (4) ausgehend von einer Mittelstellung, in der eine Verbindung zwischen einer Welle (1) und auf der Welle (1) drehbar gelagerten Bauteilen (2, 3) geöffnet ist, wahlweise in eine erste Schaltstellung, in der die Verbindung zwischen der Welle (1) und einem auf der Welle (1) drehbar gelagerten ersten Bauteil (2) geschlossen ist, oder in eine zweite Schaltstellung, in der die Verbindung zwischen der Welle (1) und einem auf der Welle (1) drehbar gelagerten zweiten Bauteil (3) geschlossen ist, verschiebbar ist und das Federmodul (7) sowohl bei einem Verschieben in Richtung der ersten Schaltstellung als auch bei einem Verschieben in Richtung der zweiten Schaltstellung wirksam ist.

10. Getriebe, insbesondere für ein Kraftfahrzeug, **dadurch gekennzeichnet, dass** das Getriebe wenigstens eine Vorrichtung (5) nach wenigstens einem der vorhergehenden Ansprüche aufweist.

## Claims

1. Device (5) for selectively displacing a shifting element (4) in the direction of a first shifting position and/or in the direction of a second shifting position, the device (5) having an actuator (6) and a spring module (7) which acts between the actuator (6) and the shifting element (4), wherein
- the spring module (7) has an actuator-side force introduction element (8), a shifting-element-side force introduction element (10), and a spring arrangement (9) which acts between the force introduction elements (8, 10) and which has a first spring end (14) and a second spring end (15),
- the actuator-side force introduction element (8) and the shifting-element-side force introduction element (10) each have a first support section (16, 18), which acts in the direction of the first shifting position, and a second support section (17, 19), which acts in the direction of the second shifting position, for supporting the spring ends (14, 15), and
- the first spring end (14) is assigned to the first support section (18) of the shifting-element-side force introduction element (10) and to the second support section (17) of the actuator-side force introduction element (8), and the second spring end (15) is assigned to the first support section (16) of the actuator-side force introduction element (8) and to the second support section (19) of the shifting-element-side force introduction element (10), **characterized in that** the spring arrangement (9) has, in a first quadrant of a force-travel diagram (22), a characteristic curve (23) with a first characteristic curve section (24) of relatively shallow gradient and with a second characteristic curve section (25) of relatively steep gradient.

2. Device (5) according to Claim 1, **characterized in that** the spring arrangement (9) has, in a first quadrant and in a third quadrant of a force-travel diagram (22), a point-symmetric characteristic curve (23).

3. Device (5) according to at least one of the preceding claims, **characterized in that** the spring arrangement (9) is prestressed.

4. Device (5) according to at least one of the preceding claims, **characterized in that** spring element (9) has disc springs (12, 13).

5. Device (5) according to at least one of the preceding claims, **characterized in that** the actuator (6), the actuator-side force introduction element (8), the spring module (7) and/or the shifting-element-side force introduction element (10) are/is arranged within a shaft (1) .

6. Device (5) according to at least one of the preceding claims, **characterized in that** a threaded spindle with a spindle rod (20) and with a spindle nut (21) acts between the actuator (6) and the actuator-side force introduction element (8).

7. Device (5) according to at least one of Claims 1 to 6, **characterized in that**
- the actuator-side force introduction element (8) and the shifting-element-side force introduction element (10) are guided so as to be rotationally fixed and displaceable with respect to one another, and
- the shifting-element-side force introduction element (10) is guided so as to be rotationally fixed and displaceable with respect to a component which is fixed with respect to the actuator.

8. Device (5) according to at least one of Claims 1 to 6, **characterized in that** the actuator-side force introduction element (8) is guided so as to be rotationally fixed and displaceable with respect to the component which is fixed with respect to the actuator.

9. Device (5) according to at least one of the preceding claims, **characterized in that** the shifting element (4) can, proceeding from a central position in which a connection between a shaft (1) and components (2, 3) mounted rotatably on the shaft (1) is open, be displaced selectively into a first shifting position, in which the connection between the shaft (1) and a first component (2) mounted rotatably on the shaft (1) is closed, or into a second shifting position, in which the connection between the shaft (1) and a second component (3) mounted rotatably on the shaft (1) is closed, and the spring module (7) acts both in the case of a displacement in the direction of the first shifting position and in the case of a displacement in the direction of the second shifting position.

10. Transmission, in particular for a motor vehicle, **characterized in that** the transmission has at least one device (5) according to at least one of the preceding claims.

## Revendications

1. Dispositif (5) pour déplacer sélectivement un élément de passage de vitesse (4) en direction d'une première position de passage de vitesse et/ou en direction d'une deuxième position de passage de vitesse, le dispositif (5) présentant un actionneur (6) et un module de ressort (7) agissant entre l'actionneur (6) et l'élément de passage de vitesse (4), dans lequel
- le module de ressort (7) présente un élément d'application d'une force (8) côté actionneur, un élément d'application d'une force (10) côté élément de passage de vitesse et un ensemble de ressorts (9) agissant entre les éléments d'application d'une force (8, 10), avec une première extrémité de ressort (14) et une deuxième extrémité de ressort (15),
- l'élément d'application d'une force (8) côté actionneur et l'élément d'application d'une force (10) côté élément de passage de vitesse présentent respectivement une première partie d'appui (16, 18) agissant en direction de la première position de passage de vitesse et une deuxième partie d'appui (17, 19) agissant en direction de la deuxième position de passage de vitesse pour servir d'appui aux extrémités de ressort (14, 15), et
- la première extrémité de ressort (14) est associée à la première partie d'appui (18) de l'élément d'application d'une force (10) côté élément de passage de vitesse et à la deuxième partie d'appui (17) de l'élément d'application d'une force (8) côté actionneur, et la deuxième extrémité de ressort (15) est associée à la première partie d'appui (16) de l'élément d'application d'une force (8) côté actionneur et à la deuxième partie d'appui (19) de l'élément d'application d'une force (10) côté élément de passage de vitesse, **caractérisé en ce que** l'ensemble de ressorts (9) présente dans un premier quadrant d'un diagramme force-déplacement (22) une courbe caractéristique (23) ayant une première section de courbe caractéristique (24) à pente inférieure et une deuxième section de courbe caractéristique (25) à pente supérieure.

2. Dispositif (5) selon la revendication 1, **caractérisé en ce que** l'ensemble de ressorts (9) présente dans un premier quadrant et dans un troisième quadrant d'un diagramme force-déplacement (22) une courbe caractéristique à symétrie ponctuelle (23).

3. Dispositif (5) selon au moins l'une des revendications précédentes, **caractérisé en ce que** l'ensemble de ressorts (9) est précontraint.

4. Dispositif (5) selon au moins l'une des revendications précédentes, **caractérisé en ce que** l'ensemble de ressorts (9) présente des ressorts à disques (12, 13).

5. Dispositif (5) selon au moins l'une des revendications précédentes, **caractérisé en ce que** l'actionneur (6), l'élément d'application d'une force (8) côté actionneur, le module de ressort (7) et/ou l'élément d'application d'une force (10) côté élément de passage de vitesse sont disposés à l'intérieur d'un arbre (1).

6. Dispositif (5) selon au moins l'une des revendications précédentes, **caractérisé en ce qu'**une broche filetée dotée d'une tige de broche (20) et d'un écrou de broche (21) agit entre l'actionneur (6) et l'élément d'application d'une force (8) côté actionneur.

7. Dispositif (5) selon au moins l'une des revendications 1 à 6, **caractérisé en ce que**
- l'élément d'application d'une force (8) côté actionneur et l'élément d'application d'une force (10) côté élément de passage de vitesse sont guidés de manière solidaire en rotation et de manière à pouvoir coulisser l'un par rapport à l'autre, et
- l'élément d'application d'une force (10) côté élément de passage de vitesse est guidé de manière solidaire en rotation et de manière à pouvoir coulisser par rapport à un composant fixé à l'actionneur.

8. Dispositif (5) selon au moins l'une des revendications 1 à 6, **caractérisé en ce que** l'élément d'application d'une force (8) côté actionneur est guidé de manière solidaire en rotation et de manière à pouvoir coulisser par rapport à un composant fixé à l'actionneur.

9. Dispositif (5) selon au moins l'une des revendications précédentes, **caractérisé en ce que** l'élément de passage de vitesse (4), en partant d'une position centrale dans laquelle une liaison entre un arbre (1) et des composants (2, 3) montés rotatifs sur l'arbre (1) est ouverte, peut être déplacé sélectivement dans une première position de passage de vitesse dans laquelle la liaison entre l'arbre (1) et un premier composant (2) monté rotatif sur l'arbre (1) est fermée, ou dans une deuxième position de passage de vitesse dans laquelle la liaison entre l'arbre (1) et un deuxième composant (3) monté rotatif sur l'arbre (1) est fermée, et le module de ressort (7) agit à la fois lors d'un déplacement en direction de la position de passage de vitesse et lors d'un déplacement en direction de la deuxième position de passage de vitesse.

10. Boîte de vitesses, en particulier pour un véhicule automobile, **caractérisée en ce que** la boîte de vitesses présente au moins un dispositif (5) selon au moins l'une des revendications précédentes.
